(19) **Europäisches Patentamt / European Patent Office / Office européen des brevets**

(11) **EP 1 354 752 B1**

(12) **FASCICULE DE BREVET EUROPEEN**

(45) Date de publication et mention
de la délivrance du brevet:
**11.01.2012 Bulletin 2012/02**

(51) Int Cl.:
***B60L 15/10*** *(2006.01)*   ***B60M 3/02*** *(2006.01)*

(21) Numéro de dépôt: **03290788.3**

(22) Date de dépôt: **28.03.2003**

(54) **Procédé et dispositif pour la régulation de la puissance demandée par une motrice de véhicule ferroviaire**

Verfahren und Vorrichtung zur Leistungssteuerung eines Eisenbahnkraftfahrzeuges

Method and device for power control of a railway motor vehicle

(84) Etats contractants désignés:
**AT BE BG CH CY CZ DE DK EE ES FI FR GB GR HU IE IT LI LU MC NL PT RO SE SI SK TR**

(30) Priorité: **19.04.2002 FR 0204933**

(43) Date de publication de la demande:
**22.10.2003 Bulletin 2003/43**

(73) Titulaire: **ALSTOM Transport SA**
**92300 Levallois-Perret (FR)**

(72) Inventeurs:
• **Debard, Jean-Michel**
**65100 Julos (FR)**
• **Liu, Rong-Fan**
**64000 Pau (FR)**

(56) Documents cités:
**WO-A-01/47742** **JP-A- 10 210 606**
**JP-A- 2000 116 189** **JP-A- 2001 269 403**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention se rapporte à un procédé pour la régulation de puissance d'une motrice de véhicule ferroviaire alimentée par une caténaire en courant continu et plus particulièrement à un procédé permettant de réguler la puissance demandée par la motrice en fonction de la puissance disponible à la caténaire. L'invention se rapporte également à un dispositif pour la mise en oeuvre de ce procédé.

Habituellement, l'alimentation en courant continu d'une motrice de véhicule ferroviaire est effectuée au moyen d'une caténaire, cette dernière étant alimentée par des sous-stations réparties le long de la voie ferrée. Ces sous-stations sont dimensionnées pour fournir une certaine puissance et lorsque la puissance absorbée par une motrice est supérieure à la puissance disponible à la caténaire, soit parce que plusieurs véhicules ferroviaires se retrouvent en même temps sur une portion de voie alimentée par la même sous-station, soit parce que la caténaire est mal alimentée pour des raisons de travaux ou de distance entre sous-stations élevée, il se produit des chutes de tension au niveau de la sous-station d'alimentation pouvant conduire à sa disjonction par surcharge ou à la disjonction de la motrice par tension basse.

Il est connu pour remédier à cet inconvénient de placer à bord des motrices un sélecteur manuel de limitation de la puissance de la motrice, ce dernier devant être positionné par le conducteur sur une position définie par le manuel de conduite. Toutefois, un tel système est basé sur des conditions nominales de fonctionnement et ne permet pas l'adaptation automatique de la puissance demandée par la motrice aux variations des conditions d'exploitation. Ainsi, un tel système bride la puissance de la motrice pour tenir compte des conditions d'exploitation les plus défavorables et ne permet pas de tirer profit des zones plus fortement alimentées, par exemple au droit des sous-stations, au niveau desquelles une plus grande puissance peut être consommée par la motrice.

Une autre solution connue consiste à déterminer la puissance maximum consommable par la motrice à partir de la mesure de la tension caténaire. Cette solution est en générale efficace si la motrice n'est pas trop éloignée de la sous-station. Toutefois, lorsque l'engin est très éloigné de la sous-station, la résistance de la caténaire devient importante et la tension de ligne dépend alors très fortement du courant circulant dans la caténaire et donc de la puissance absorbée par la motrice. Dans un tel cas, une faible augmentation de la consommation implique une chute de tension caténaire importante et, l'action de l'algorithme de limitation de puissance étant fonction de la tension caténaire, le gain du système de régulation devient de plus en plus élevé conduisant à un système de régulation de la puissance instable.

Le but de la présente invention est donc de proposer un procédé et un dispositif de régulation de la puissance d'une motrice de véhicule ferroviaire qui soit stable et qui assure un fonctionnement optimisé du véhicule ferroviaire en fonction de la puissance disponible à la caténaire.

L'invention a pour objet un procédé pour la régulation de la puissance demandée par une motrice de véhicule ferroviaire, ladite motrice comportant des moyens collecteurs de courant coopérant avec une caténaire alimentée en courant continu par des sous-stations d'alimentation réparties le long de la voie ferrée, caractérisé en ce qu'il comporte les étapes de :

- mesure de la tension caténaire V*cat* au niveau de la motrice ;
- mesure du courant caténaire I*cat* au niveau de la motrice ;
- évaluation de la tension à vide V$cat_0$ de la sous-station alimentant la caténaire sur laquelle la motrice est connectée;

- évaluation de la puissance maximale disponible à la caténaire à partir de la relation $\mathbf{P}max = \dfrac{(\mathrm{V}cat_0)^2}{4*R}$ où R est la résistance de caténaire calculée à l'aide de la relation $\mathbf{R} = \dfrac{(\mathrm{V}cat_0 - \mathrm{V}cat)}{\mathbf{I}cat}$ ;

- limitation de la puissance demandée par la motrice à une puissance limite P*lim* inférieure ou égale à la puissance maximale P*max* calculée.

Selon une autre caractéristique de l'invention, l'évaluation de la tension à vide V$cat_0$ de la sous-station est obtenue en corrigeant la valeur de la tension à vide théorique V$cat_0$' de la sous-station au moyen d'un régulateur de type proportionnel intégrateur dont l'entrée est la différence R'- R, où R' est la résistance dynamique de la caténaire.

Selon encore une autre caractéristique de l'invention, la puissance limite P*lim* est calculée en affectant un coefficient réducteur K, compris entre 0 et 1, à la puissance P*max* calculée, ce coefficient réducteur K tenant compte des limitations imposées par les infrastructures.

L'invention concerne également un dispositif pour la régulation de la puissance d'une motrice de véhicule ferroviaire, ladite motrice comportant des moyens collecteurs de courant coopérant avec une caténaire alimentée en courant continu par des sous-stations d'alimentation réparties le long de la voie ferrée, caractérisé en ce qu'il comporte :

- des moyens (14) de mesures de la tension caténaire V*cat* au niveau de la motrice ;
- des moyens (15) de mesure du courant caténaire I*cat* au niveau de la motrice ;
- un étage (21) d'évaluation de la tension de la sous-station V*cat*$_0$ alimentant la caténaire sur laquelle la motrice est connectée ;
- un étage (20) d'évaluation de la puissance maximale P*max* disponible à la caténaire comportant un module (6) de calcul de résistance équivalente $R = \dfrac{(Vcat_0 - Vcat)}{Icat}$ et un module (10) de calcul de la puissance $Pmax = \dfrac{(Vcat_0)^2}{4*R}$ ;
- des moyens limitant la puissance demandée par la motrice en deçà de la puissance maximale P*max* calculée.

Selon des modes particuliers de réalisation, le dispositif de régulation de puissance selon l'invention peut comprendre l'une ou plusieurs des caractéristiques suivantes prises isolément ou selon toutes les combinaisons techniquement possibles :

- l'étage d'évaluation de la tension de sous-station V*cat*$_0$ comporte au moins une mémoire délivrant un signal V*cat*$_0$' correspondant à la tension à vide théorique de la sous-station alimentant la motrice, le signal V*cat*$_0$' servant de valeur de base pour l'évaluation de la tension de sous-station V*cat*$_0$.

- l'étage d'évaluation de la tension de la sous-station V*cat*$_0$ comporte en outre des moyens d'élaboration d'un signal de correction qui est injecté dans le signal de la tension à vide théorique V*cat*$_0$', le signal de correction étant élaboré au moyen d'un régulateur de type proportionnel intégrateur qui reçoit en entrée la différence R'-R, où R' est la résistance dynamique de la caténaire.

- la puissance maximale P*max* est corrigée par un coefficient multiplicateur K obtenu à partir d'un module réducteur tenant compte des limitations imposées par l'infrastructure.

- les moyens de mesure de la tension caténaire V*cat* et du courant caténaire I*cat* sont des capteurs portés par les moyens collecteurs de courant.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :

- La figure 1 est un schéma synoptique montrant la structure d'un dispositif pour la régulation de puissance conforme à l'invention ;

- La figure 2 est une représentation schématique d'un circuit électrique de puissance d'une sous-station alimentant un véhicule ferroviaire.

Pour faciliter la lecture du dessin, seuls les éléments nécessaires à la compréhension de l'invention ont été représentés.

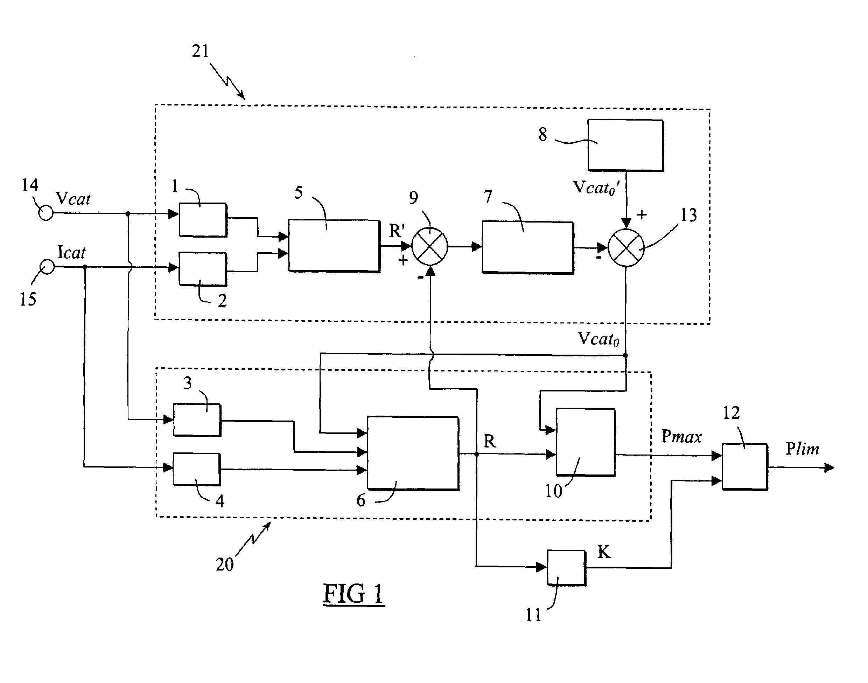

La figure 1 représente la structure générale d'un dispositif de régulation de la puissance d'une motrice de véhicule ferroviaire selon un mode particulier de l'invention.
Conformément à cette figure, le dispositif comporte un étage 20 d'évaluation de la puissance maximale P*max* disponible à la caténaire, cet étage 20 fonctionnant en parallèle avec un étage 21 d'évaluation de la tension à vide V*cat*$_0$ de la sous-station alimentant la caténaire sur laquelle est connecté le véhicule ferroviaire.
L'étage 20 d'évaluation de la puissance maximale comporte un module 6 de calcul de la résistance de la caténaire R et un module 10 d'évaluation de la puissance maximale P*max* disponible à la caténaire.
Le module 6 reçoit en entrée d'une part des signaux de mesure de la tension V*cat* et du courant caténaire I*cat* envoyés respectivement par des capteurs 14 et 15 disposés au niveau du pantographe de la motrice et d'autre part la valeur V*cat*$_0$ obtenue par l'étage 21 d'évaluation de la tension à vide de la sous-station. Conformément à la figure 1, les signaux V*cat* et I*cat* sont filtrés par des filtres passe bas 3 et 4 avant d'être envoyés dans le module de calcul 6.
A partir des entrées I*cat*, V*cat* et V*cat*$_0$, le module 6 procède au calcul la résistance caténaire à l'aide de la relation :

$$R = \frac{(Vcat_0 - Vcat)}{Icat}$$

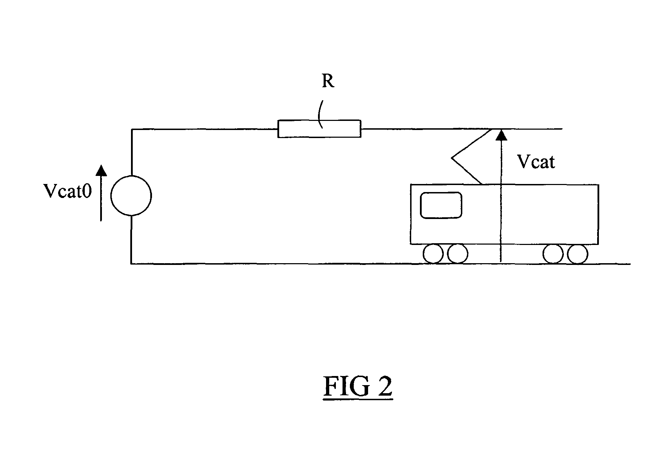

Cette équation peut facilement être déduite de la figure 2, représentant un schéma électrique de puissance illustrant l'alimentation de la motrice de véhicule ferroviaire lorsque cette dernière est connectée à une caténaire. Sur cette figure 2, la sous-station d'alimentation qui alimente la caténaire est symbolisée par un générateur fournissant la tension $Vcat_0$ et la résistance de la portion de caténaire séparant la sous-station de la motrice est symbolisée par une résistance R.

La sortie R du module 6 est fournie en entrée du module 10 qui reçoit également en entrée la valeur $Vcat_0$ obtenue en sortie de l'étage 21 d'évaluation de la tension à vide de la sous-station. Le module 10 calcule à partir de ces données la puissance maximale disponible à la caténaire à l'aide de la relation :

$$Pmax = \frac{(Vcat_0)^2}{4*R} \ .$$

Cette relation peut être déduite des équations suivantes établies en référence à la figure 2:

$$Vcat = Vcat_0 - R*Icat \ \text{et} \ P = Vcat*Icat$$

soit

$$P = (Vcat_0*Icat) - R*(Icat)^2$$

d'où

$$\frac{\partial P}{\partial Icat} = Vcat_0 - 2*R*Icat$$

et

$$\frac{\partial P}{\partial Icat} = 0 \Rightarrow Icat_{max} = \frac{Vcat0}{2*R} \Rightarrow Pmax = \frac{(Vcat_0)^2}{4*R}$$

La sortie du module 10 est ensuite envoyée en entrée d'un circuit multiplicateur 12 qui reçoit également la valeur d'un coefficient réducteur K (0<K<1) d'un module 11 permettant de tenir compte des limitations imposées par les infrastructures. Ce coefficient K dépend du réseau sur lequel le véhicule circule et est fourni par une base de données contenue dans le module 11, ce coefficient K étant fonction de la valeur de la résistance R de la caténaire calculée par le module 6.

La sortie du circuit multiplicateur 12 fournie la puissance limite P*lim* correspondant à la puissance maximale que peut demander, à un instant donné, l'ensemble les équipements consommateurs d'électricité du véhicule ferroviaire sans risque de chute de tension à la caténaire. Cette valeur P*lim* est enfin envoyée dans des moyens, non représentées, limitant la puissance demandée par la motrice afin que celle-ci ne dépasse pas P*lim.*

Le fonctionnement de l'étage 21 d'évaluation de la tension à vide $Vcat_0$ de la sous-station va maintenant être faite en référence à la figure 1.

L'étage 21 comporte un module 5 permettant de calculer la résistance dynamique R' de la caténaire. Ce module 5 reçoit en entrée les signaux de mesure de la tension V*cat* et du courant I*cat* fournis par les capteurs 14 et 15, ces

4

signaux étant filtrés par des filtres 1 et 2 à traitement lent permettant de ne conserver que les signaux primitifs envoyés par les capteurs de mesures. Le module 5 mémorise, à intervalles de temps Δt, les valeurs Vcat et Icat et procède successivement au calcul de résistance dynamique R' à l'aide de la relation :

$$R' = \frac{\Delta Vcat}{\Delta Icat} = \frac{Vcat(t + \Delta t) - Vcat(t)}{Icat(t + \Delta t) - Icat(t)}$$

Cette résistance dynamique R' correspond à la somme de la résistance de la caténaire, de la résistance de la sous-station et d'une résistance fictive correspondant à la chute de tension provoquée par la consommation de motrices reliées à la même sous-station lorsque plusieurs motrices circulent sur un même ligne.

La valeur calculée R' est ensuite envoyée en entrée d'un soustracteur 9 qui soustrait à cette valeur la résistance R calculée, à l'itération précédente, par le module 6 de l'étage 20 précédemment décrit. La sortie de ce soustracteur 9 est envoyée en entrée d'un régulateur 7 de type proportionnel intégrateur muni d'une valeur de sortie limitée. Le signal de sortie du régulateur 7 fourni un signal de correction qui est envoyé dans un soustracteur 13 de manière à le soustraire d'un signal $Vcat_0'$ correspondant à la tension à vide théorique d'alimentation de la sous-station fournie par une mémoire 8. La sortie du soustracteur 13 correspond à un signal corrigé $Vcat_0$ qui est envoyé aux modules 6 et 10 de l'étage 20 d'évaluation de la puissance maximale disponible à la caténaire. Pour lancer le processus de calcul, la valeur $Vcat_0$ fourni par l'étage 21 à l'étage 20 lors de la première itération de calcul, est avantageusement égale à la valeur théorique $Vcat_0'$ de la tension à vide de la sous-station.

Un tel étage d'évaluation 21 présente l'avantage de tenir compte des chutes de tension de la sous-station provoquées par un dépassement de la puissance demandée par la motrice par rapport à la puissance réellement disponible à la caténaire.

Le dispositif de régulation ainsi réalisé permet, après l'établissement de plusieurs itérations de calcul des étages 20 et 21, d'obtenir à chaque instant la puissance maximale disponible à la caténaire et ainsi d'obtenir, en tenant compte d'un coefficient réducteur correspondant aux limitations imposées par les infrastructures, la puissance limite P*lim* pouvant être demandée à chaque instant par un véhicule ferroviaire circulant sur la ligne alimentée par la sous-station.

En conséquence, le dispositif de régulation selon l'invention permet de déterminer la consigne de puissance maximale qui ne doit pas être dépassée par la motrice du véhicule ferroviaire et qui doit être répartie entre tous les équipements consommateurs d'électricité à bord du véhicule ferroviaire, tels que moteurs de traction, chauffage du train et équipements auxiliaires.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

**Revendications**

**1.** Procédé pour la régulation de la puissance demandée par une motrice de véhicule ferroviaire, ladite motrice comportant des moyens collecteurs de courant coopérant avec une caténaire alimentée en courant continu par des sous-stations d'alimentation réparties le long de la voie ferrée, **caractérisé en ce qu'**il comporte les étapes de :

- mesure de la tension caténaire *Vcat* au niveau de la motrice ;
- mesure du courant caténaire *Icat* au niveau de la motrice ;
- évaluation de la tension à vide $Vcat_0$ de la sous-station alimentant la caténaire sur laquelle la motrice est connectée;

- évaluation de la puissance maximale disponible à la caténaire à partir de la relation $P{max} = \frac{(Vcat_0)^2}{4 * R}$ où R est la résistance de caténaire calculée à l'aide de la relation $R = \frac{(Vcat_0 - Vcat)}{Icat}$

- limitation de la puissance demandée par la motrice à une puissance limite P*lim* inférieure ou égale à la puissance maximale P*max* calculée.

**2.** Procédé pour la régulation de la puissance demandée par une motrice de véhicule ferroviaire selon la revendication 1, **caractérisé en ce que** l'évaluation de la tension à vide $Vcat_0$ de la sous-station est obtenue en corrigeant la valeur de la tension à vide théorique $Vcat_0$' de ladite sous-station au moyen d'un régulateur (7) de type proportionnel intégrateur dont l'entrée est la différence R'- R, où R' est la résistance dynamique de la caténaire.

**3.** Procédé pour la régulation de la puissance selon l'une quelconque des revendications 1 à 2, **caractérisé en ce que** la puissance limite P*lim* est calculée en affectant un coefficient réducteur K, compris entre 0 et 1, à la puissance P*max* calculée, ce coefficient réducteur K tenant compte des limitations imposées par les infrastructures.

**4.** Dispositif pour la régulation de la puissance d'une motrice de véhicule ferroviaire, ladite motrice comportant des moyens collecteurs de courant coopérant avec une caténaire alimentée en courant continu par des sous-stations d'alimentation réparties le long de la voie ferrée, **caractérisé en ce qu'**il comporte :

- des moyens (14) de mesures de la tension caténaire V*cat* au niveau de la motrice ;
- des moyens (15) de mesure du courant caténaire *Icat* au niveau de la motrice ;
- un étage (21) d'évaluation de la tension de la sous-station $Vcat_0$ alimentant la caténaire sur laquelle la motrice est connectée ;
- un étage (20) d'évaluation de la puissance maximale P*max* disponible à la caténaire comportant un module (6) de calcul de résistance équivalente $R = \dfrac{(Vcat_0 - Vcat)}{Icat}$ et un module (10) de calcul de la puissance

$$Pmax = \frac{(Vcat_0)^2}{4*R} \; ;$$

- des moyens limitant la puissance demandée par la motrice en deçà de la puissance maximale *Pmax* calculée.

**5.** Dispositif selon la revendication 4, **caractérisé en ce que** ledit étage (21) d'évaluation de la tension de sous-station $Vcat_0$ comporte au moins une mémoire délivrant un signal $Vcat_0$' correspondant à la tension à vide théorique de la sous-station alimentant la motrice, ledit signal $Vcat_0$' servant de valeur de base pour l'évaluation de la tension de sous-station $Vcat_0$.

**6.** Dispositif selon l'une quelconque des revendications 4 à 5, **caractérisé en ce que** ledit étage (21) d'évaluation de la tension de la sous-station $Vcat_0$ comporte en outre des moyens d'élaboration d'un signal de correction qui est injecté dans le signal de la tension à vide théorique $Vcat_0$', ledit signal de correction étant élaboré au moyen d'un régulateur (7) de type proportionnel intégrateur qui reçoit en entrée la différence R'-R ,où R' est la résistance dynamique de la caténaire.

**7.** Dispositif selon l'une quelconque des revendications 4 à 6, **caractérisé en ce que** ladite puissance maximale *Pmax* est corrigée par un coefficient multiplicateur K obtenu à partir d'un module réducteur (11) tenant compte des limitations imposées par l'infrastructure.

**8.** Dispositif selon l'une quelconque des revendications 4 à 7, **caractérisé en ce que** les moyens (14, 15) de mesure de la tension caténaire *Vcat* et du courant caténaire *Icat* sont des capteurs portés par les moyens collecteurs de courant.

**Claims**

**1.** Method of regulating the power demanded by a rail motor including current collector means cooperating with a catenary supplied with direct current power by power supply substations distributed along the track, **characterized in that** it includes the steps of:

- measuring the catenary voltage V*cat* at the rail motor;
- measuring the catenary current Icat at the rail motor;
- evaluating the no-load voltage $Vcat_0$ of the substation supplying power to the catenary to which the rail motor is connected;
- evaluating the maximum power available to the catenary from the equation:

EP 1 354 752 B1

$$Pmax = \frac{(Vcat_0)^2}{4*R}$$

where R is the resistance of the catenary calculated from the equation:

$$R = \frac{(Vcat_0 - Vcat)}{Icat} ;$$

and
- limiting the power demanded by the rail motor to a power limit Plim less than or equal to the calculated maximum power P*max*.

2. Method according to Claim 1 for regulating the power demanded by a rail motor, **characterized in that** the no-load voltage $Vcat_0$ of the substation is evaluated by correcting the value of the theoretical no-load voltage $Vcat_0$' of said substation by means of a proportional-integral regulator (7) whose input is the difference R'-R, where R' is the dynamic resistance of the catenary.

3. Power regulation method according to either of Claims 1 and 2, **characterized in that** the power limit Plim is calculated by applying to the calculated power *Pmax* a reducing coefficient K from 0 to 1 taking account of limitations imposed by the infrastructures.

4. System for regulating the power demanded by a rail motor including current collector means cooperating with a catenary supplied with direct current power by power supply substations distributed along the track, **characterized in that** it includes:

   - means (14) for measuring the catenary voltage V*cat* at the rail motor;
   - means (15) for measuring the catenary current Icat at the rail motor;
   - a stage (21) for evaluating the no-load voltage $Vcat_0$ of the substation supplying power to the catenary to which the rail motor is connected;
   - a stage (20) for evaluating the maximum power *Pmax* available to the catenary including a module (6) for calculating the equivalent resistance $R = \frac{(Vcat_0 - Vcat)}{Icat}$ and a module (10) for calculating the power

   $Pmax = \frac{(Vcat_0)^2}{4*R}$ ; and

   - means for limiting the power demanded by the rail motor to a value less than or equal to the calculated maximum power *Pmax*.

5. System according to Claim 4, **characterized in that** said stage (21) for evaluating the substation voltage $Vcat_0$ includes at least one memory delivering a signal $Vcat_0$' corresponding to the theoretical no-load voltage of the substation supplying power to the rail motor, said signal $Vcat_0$' serving as a basic value for evaluating the substation voltage $Vcat_0$.

6. System according to either of Claims 4 and 5, **characterized in that** said stage (21) for evaluating the substation voltage $Vcat_0$ further includes means for producing a correction signal that is injected into the theoretical no-load signal $Vcat_0$' and is produced by a proportional-integral regulator (7) which receives as input the difference R'-R, where R' is the dynamic resistance of the catenary.

7. System according to any of Claims 4 to 6, **characterized in that** said maximum power *Pmax* is corrected by a multiplier coefficient K obtained from a reducer module (11) taking account of limitations imposed by the infrastructure.

8. System according to any of Claims 4 to 7, **characterized in that** the means (14, 15) for measuring the catenary voltage V*cat* and the catenary current Icat are sensors carried by the current collector means.

7

**Patentansprüche**

1. Verfahren zur Regelung der von einem Schienenfahrzeug-Triebwagen angeforderten Leistung, wobei der Triebwagen Stromabnehmereinrichtungen aufweist, die mit einer Oberleitung zusammenwirken, welche von Versorgungs-Unterwerken mit Gleichstrom versorgt wird, die entlang des Bahngleises verteilt sind, **dadurch gekennzeichnet, dass** es die folgenden Schritte aufweist:

   - Messen der Oberleitungsspannung V*cat* im Bereich des Triebwagens;
   - Messen des Oberleitungsstroms Icat im Bereich des Triebwagens;
   - Ermittlung der Leerspannung V$cat_0$ des die Oberleitung versorgenden Unterwerks, mit der der Triebwagen verbunden ist;

   - Ermittlung der maximal für die Oberleitung verfügbaren Leistung ausgehend von der Beziehung

   $$P\max = \frac{(\text{Vcat0})^2}{4*R}, \text{ wobei R der}$$

   Oberleitungswiderstand berechnet mit Hilfe der Beziehung $R = \frac{(\text{Vcat0} - \text{Vcat})}{\text{Icat}}$ ist;

   - Begrenzung der vom Triebwagen geforderten Leistung auf eine Grenzleistung P*lim* geringer als die oder gleich der berechneten maximalen Leistung *Pmax.*

2. Verfahren zur Regelung der von einem Schienenfahrzeug-Triebwagen angeforderten Leistung nach Anspruch 1, **dadurch gekennzeichnet, dass** die Ermittlung der Leerspannung V$cat_0$ des Unterwerks durch Korrigieren des Werts der theoretischen Leerspannung V$cat_0$' des Unterwerks mittels eines Reglers (7) von der Art Proportional-Integral erhalten wird, dessen Eingangssignal die Differenz R'-R ist, wobei R' der dynamische Widerstand der Oberleitung ist.

3. Verfahren zur Leistungsregelung nach einem der Ansprüche 1 bis 2, **dadurch gekennzeichnet, dass** die Grenzleistung P*lim* berechnet wird, indem der berechneten Leistung *Pmax* ein Reduktionskoeffizient K zwischen 0 und 1 zugeordnet wird, wobei dieser Reduktionskoeffizient K die von den Infrastrukturen auferlegten Einschränkungen berücksichtigt.

4. Vorrichtung zur Regelung der Leistung eines Schienenfahrzeug-Triebwagens, wobei der Triebwagen Stromabnehmereinrichtungen aufweist, die mit einer Oberleitung zusammenwirken, welche von Versorgungs-Unterwerken mit Gleichstrom versorgt wird, die entlang des Bahngleises verteilt sind, **dadurch gekennzeichnet, dass** sie aufweist:

   - Einrichtungen (14) zur Messung der Oberleitungsspannung *Vcat* im Bereich des Triebwagens;
   - Einrichtungen (15) zur Messung des Oberleitungsstroms *Icat* im Bereich des Triebwagens;
   - eine Stufe (21) zur Ermittlung der Spannung des Unterwerks V$cat_0$, das die Oberleitung versorgt, mit der der Triebwagen verbunden ist;
   - eine Stufe (20) der Ermittlung der maximal für die Oberleitung verfügbaren Leistung *Pmax,* die ein Modul (6) zur Berechnung des äquivalenten Widerstands $R = \frac{(Vcat_0 - Vcat)}{Icat}$ und ein Modul (10) zur Berechnung der Leistung $P\max = \frac{(\text{Vcat0})^2}{4*R}$

   aufweist;
   - Einrichtungen, die die vom Triebwagen geforderte Leistung unterhalb der berechneten maximalen Leistung P*max* begrenzen.

5. Vorrichtung nach Anspruch 4, **dadurch gekennzeichnet, dass** die Stufe (21) zur Ermittlung der Unterwerk-Spannung V$cat_0$ mindestens einen Speicher aufweist, der ein Signal V$cat_0$' liefert, das der theoretischen Leerspannung des den Triebwagen versorgenden Unterwerks entspricht, wobei das Signal V$cat_0$' als Basiswert für die Ermittlung der Unterwerk-Spannung V$cat_0$ dient.

**6.** Vorrichtung nach einem der Ansprüche 4 bis 5, **dadurch gekennzeichnet, dass** die Stufe (21) zur Ermittlung der Spannung des Unterwerks V$cat_0$ außerdem Einrichtungen zur Erarbeitung eines Korrektursignals aufweist, das in das Signal der theoretischen Leerspannung V$cat_0$' eingespeist wird, wobei das Korrektursignal mittels eines Reglers (7) vom Typ Proportional-Integral erarbeitet wird, der am Eingang die Differenz R'-R empfängt, wobei R' der dynamische Widerstand der Oberleitung ist.

**7.** Vorrichtung nach einem der Ansprüche 4 bis 6, **dadurch gekennzeichnet, dass** die maximale Leistung *Pmax* durch einen Multiplikationskoeffizient K korrigiert wird, der ausgehend von einem Reduktionsmodul (11) erhalten wird, das die durch die Infrastruktur auferlegten Beschränkungen berücksichtigt.

**8.** Vorrichtung nach einem der Ansprüche 4 bis 7, **dadurch gekennzeichnet, dass** die Einrichtungen (14, 15) zur Messung der Oberleitungsspannung *Vcat* und des Oberleitungsstroms Icat Sensoren sind, die von den Stromabnehmereinrichtungen getragen werden.

FIG 1

EP 1 354 752 B1

R

Vcat0

Vcat

## FIG 2